# FASCICULE DE BREVET EUROPEEN

(11) **EP 2 094 563 B1**
(45) Date de publication et mention de la délivrance du brevet: **12.05.2010**
(21) Numéro de dépôt: 07872432.5
(22) Date de dépôt: 21.12.2007
(51) Int. Cl.: B64D 11/00, B64D 45/00

(54) **PARTIE AVANT D'UN AÉRONEF INCLUANT UN COMPARTIMENT DE REPOS POUR AU MOINS UN PILOTE**
VORDERTEIL FÜR EIN FLUGZEUG MIT EINEM RUHEBEREICH FÜR MINDESTENS EINEN PILOTEN
FRONT PORTION FOR AN AIRCRAFT INCLUDING A REST COMPARTMENT FOR AT LEAST ONE PILOT

(30) Priorité: 26.12.2006 FR 0611361
(43) Date de publication de la demande: 02.09.2009
(73) Titulaire: Airbus, 31700 Blagnac (FR); Airbus Deutschland GmbH, 21129 Hamburg (DE)
(72) Inventeur: SAINT-JALMES, Bruno, F-31400 Toulouse (FR); RUMEAU, Bernard, F-31700 Cornebarrieu (FR); ZANEBONI, Jason, F-31700 Blagnac (FR); ALQUIER, Bruno, F-31700 Blagnac (FR); JAVELLE, Jérôme, F-31400 Toulouse (FR); VOELKNER, Joachim, 89143 Erstetten (DE); GELDIEN, Martin, 88471 Laupheim (DE)
(74) Mandataire: Hartmann, Jean-Luc
(86) Numéro de dépôt international: PCT/FR2007/002149
(87) Numéro de publication internationale: WO 2008/102070

(56) Documents cités:
- EP-A1- 1 332 965
- US-A- 1 731 531
- US-A1- 2003 066 931
- US-A1- 2003 071 743

## Description

La présente invention concerne une partie avant d'un fuselage d'aéronef comportant un compartiment de repos pour au moins un pilote de l'aéronef.

Depuis les événements du 11 septembre 2001, la sécurité des pilotes dans un aéronef est un élément important dans la conception de l'aéronef. Il convient notamment de pouvoir empêcher toute personne non autorisée de pénétrer dans le cockpit et de prendre le contrôle de l'aéronef. Avant ces événements, le cockpit n'était généralement séparé de la cabine de l'aéronef que par une porte non blindée.

En outre, pour les vols long-courriers, les pilotes doivent se relayer aux commandes de l'aéronef. De manière connue, il est alors prévu d'avoir un compartiment de repos dans l'aéronef. Ainsi, le document EP-1 010 617 révèle par exemple une forme de réalisation d'un compartiment de repos pour pilotes d'aéronef. Dans ce document, il est prévu de réaliser ce compartiment de repos dans la partie supérieure de la cabine passagers de l'aéronef.

La forme de réalisation proposée dans ce document de l'art antérieur (et plus généralement les autres solutions connues) présente l'inconvénient d'empiéter sur le volume normalement prévu pour accueillir les passagers et les bagages les accompagnant dans la cabine. De ce fait le volume disponible prévu pour générer des revenus à la compagnie aérienne exploitant l'aéronef est amputé.

La solution proposée par ce document de l'art antérieur présente également l'inconvénient que les pilotes doivent passer par la cabine passagers pour rejoindre le compartiment de repos ou bien le cockpit. De ce fait, les pilotes sont vulnérables si des passagers mal intentionnés se trouvent dans la cabine passagers. Enfin, l'espace disponible dans le compartiment de repos de ce document de l'art antérieur est limité. On remarque notamment qu'un pilote voulant changer ses vêtements ne peut pas se tenir debout en étant redressé, ce qui rend ce changement de vêtements difficile.

Le document EP-1 332 965 révèle un dispositif d'accès à sas de sécurité pour l'accès au cockpit d'un avion de transport. Le poste de pilotage de cet avion communique avec la cabine passagers via une zone d'accès et le sas de sécurité présente une conformation cylindrique et peut tourner autour de son axe longitudinal à l'intérieur d'une structure formant bâti étant disposé à l'intérieur de la zone d'accès. Le sas de sécurité révélé par ce document présente un accès de sas, dont l'ouverture coïncide avec au moins deux secteurs d'accès/sortie de al structure formant bâti, l'accès de sas pouvant être amené dans une position de secteur sélectionnée des secteurs d'accès/sortie par rotation du sas autour de son axe longitudinal et bloqué dans cette positon, tandis que simultanément tous les autres secteurs d'accès/sortie sont condamnés en accès/sortie. La solution proposée ici nécessite un aménagement très particulier qui est également encombrant dans l'espace destiné au personnel navigant de l'avion.

La présente invention a alors pour but de fournir une configuration de la partie avant d'un aéronef comportant une zone de repos pour au moins un pilote et permettant un accès sécurisé des pilotes entre le cockpit et la zone de repos. Cette configuration permettra de préférence de ne pas empiéter sur le volume de la cabine passagers. Avantageusement, cette zone de repos procurera un grand confort aux pilotes l'utilisant.

A cet effet, la présente invention propose une partie avant de fuselage d'aéronef comportant un cockpit, une toilette, un couloir d'accès au cockpit longeant la toilette, et un compartiment de repos avec au moins une couchette pour au moins un pilote, le couloir longeant la toilette comportant, d'une part, des moyens de séparation du couloir par rapport au cockpit et, d'autre part, une porte permettant de fermer l'accès vers une cabine passagers et l'accès au compartiment de repos se faisant à partir du couloir d'accès au cockpit, entre les moyens de séparation entre le couloir et le cockpit et ladite porte du couloir.

Selon la présente invention, la toilette comporte deux portes d'accès, une première porte d'accès permettant l'accès à la toilette depuis le couloir d'accès au cockpit dans la zone comprise entre les moyens de séparation entre le couloir et le cockpit et ladite porte du couloir et une seconde porte d'accès permettant d'accéder à la toilette depuis la cabine passagers.

Cette configuration permet une gestion nouvelle de la toilette qui peut être utilisée par les pilotes et les passagers. Toutefois, dans cette configuration, le couloir longeant la toilette et la toilette peuvent venir agrandir le compartiment de repos dont l'accès se fait par ledit couloir.

Dans une forme de réalisation permettant une bonne isolation de la zone de repos des pilotes (comprenant non seulement le compartiment de repos mais aussi parfois la toilette et le couloir la longeant) les moyens de séparation entre le couloir d'accès au cockpit et le cockpit sont constitués d'une seconde porte du couloir.

L'accès au compartiment de repos fait par exemple face à la première porte d'accès de la toilette. Le couloir d'accès au cockpit est, quant à lui, par exemple disposé entre, d'une part, la toilette et, d'autre part, un monument tel par exemple un module de rangement, une autre toilette, une cuisine, etc.. On entend ici par monument une structure fixée au sol et habituellement appelée dans le domaine de l'aviation par le terme anglais "monument". Dans cette forme de réalisation, le monument peut comprendre un compartiment bas pour le rangement de chariots, et un palier d'accès à la couchette au nombre d'au moins une est par exemple réalisé dans le monument au-dessus du compartiment de rangement de chariots, le palier d'accès se trouvant à une altitude intermédiaire entre, d'une part, le sol du couloir d'accès au cockpit et, d'autre part, ladite couchette. Un second monument, disposé face au premier monument et séparé de celui-ci par un couloir transversal par rapport à l'aéronef, peut alors servir de support à la couchette au nombre d'au moins une qui s'étend par exemple au-dessus du couloir transversal et au-dessus de ce second monument.

Pour pouvoir être utilisé aussi lors de vols très long-courriers, le compartiment de repos comporte de préférence deux couchettes.

Pour assurer la sécurité des pilotes se trouvant dans la partie avant de fuselage d'aéronef selon l'invention, on prévoit par exemple que les portes et parois séparant la toilette, le cockpit et le compartiment de repos de la cabine passagers sont blindées. Avantageusement, la première porte d'accès de la toilette et la paroi l'entourant est également blindée car elle peut être une séparation entre la zone occupée par les pilotes et la zone occupée par les passagers lorsque la toilette est utilisable par les passagers.

Enfin, la présente invention concerne également un aéronef, **caractérisé en ce qu**'il comporte une partie avant de fuselage telle que décrite ci-dessus.

Des détails et avantages de la présente invention ressortiront mieux de la description qui suit, faite en référence aux dessins schématiques annexés sur lesquels :
- la figure 1 est une vue en perspective de dessus d'un compartiment de repos d'une partie d'un fuselage avant d'aéronef selon l'invention,
- la figure 2 est une vue en perspective de côté correspondant à la vue de dessus de la figure 1,
- la figure 3 est une vue en perspective montrant sous un premier angle de perspective la partie avant de l'aéronef selon l'invention,
- la figure 4 est une vue en perspective d'un compartiment de repos des figures précédentes.

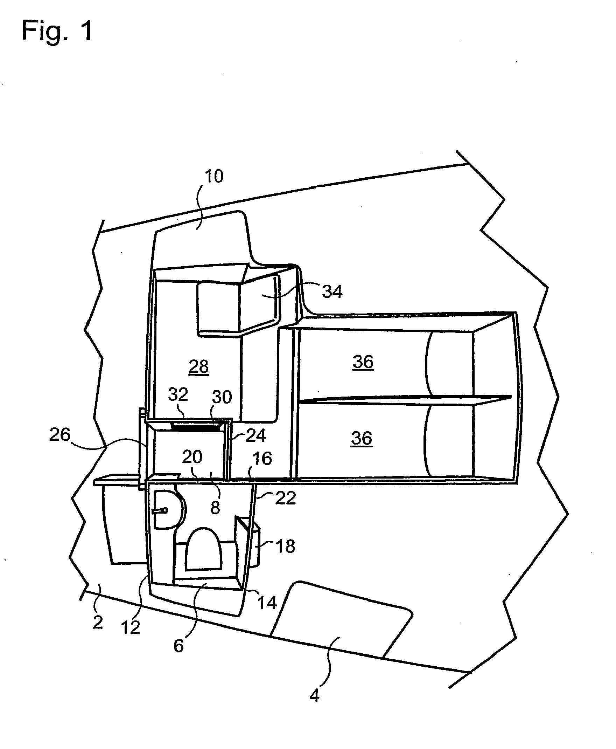

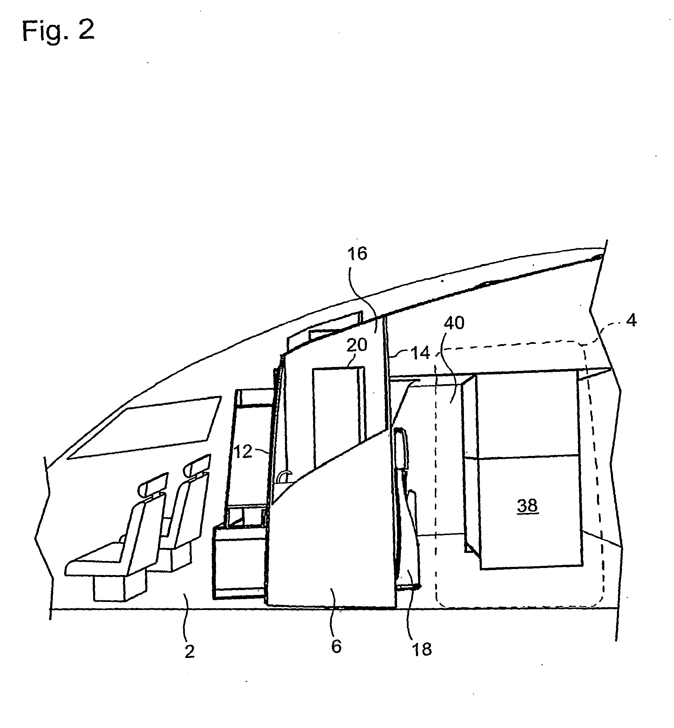

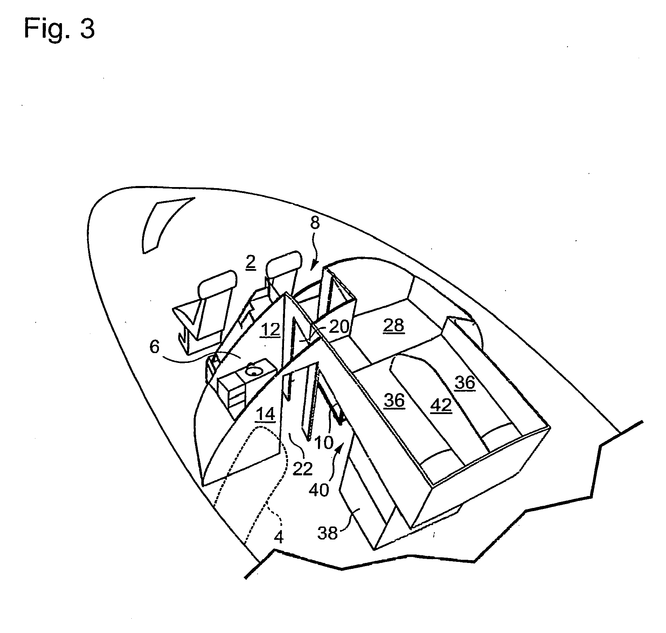

On reconnaît, sur les figures 1 à 3, une partie d'un cockpit 2 d'aéronef. Il s'agit ici d'un cockpit tout à fait classique, et donc connu de l'homme du métier. Il est inutile, de ce fait, de le décrire ici dans le détail.

L'aéronef décrit ici est un aéronef pour le transport commercial de passagers. Il s'agit notamment d'un aéronef pouvant transporter plus de cent passagers. Une porte d'embarquement 4 permet aux passagers d'accéder à une cabine passagers de l'aéronef.

Lorsqu'un passager pénètre dans l'aéronef par la porte d'embarquement 4, il trouve, sur sa gauche, et dans l'ordre suivant, une toilette 6, un couloir 8 d'accès au cockpit 2 et un module de rangement 10. Ces divers éléments séparent le cockpit 2 de la cabine passagers.

La toilette 6 comporte, de manière classique, une paroi transversale 12 séparant la toilette 6 du cockpit 2, une paroi transversale 14 séparant la toilette 6 de la cabine passagers et une paroi longitudinale 16 séparant la toilette 6 du couloir 8. De manière classique, un siège 18 est placé contre la paroi transversale 14 du côté de la cabine passagers.

De façon originale, la toilette 6 comporte deux portes d'accès. Une première porte d'accès 20 permet d'accéder à la toilette 6 depuis le couloir 8. Une seconde porte d'accès 22 est réalisée dans la paroi transversale 14 et permet d'accéder à la toilette 6 depuis la cabine passagers. La seconde porte d'accès 22 de la toilette 6 est disposée à côté du siège 18 destiné à accueillir un membre d'équipage de l'aéronef durant les phases de décollage et d'atterrissage.

Pour des raisons de clarté, certaines portes ne sont pas représentées sur les figures. Seules les ouvertures correspondantes sont représentées. Ces ouvertures portent alors le numéro de référence donné à la porte correspondante dans la description.

Le couloir 8 se trouve entre la toilette 6 et le module de rangement 10. Il sépare ces deux éléments en créant un passage entre ceux-ci pour permettre l'accès au cockpit 2. Une première porte de couloir 24 permet d'isoler le couloir 8 de la cabine passagers. Une seconde porte de couloir 26 permet, quant à elle, d'isoler le couloir 8 du cockpit 2. Ces deux portes sont disposées aux extrémités du couloir 8. Ainsi, la première porte d'accès 20 de la toilette 6 réalisée dans la paroi longitudinale 16 de la toilette 6 se trouve entre la première porte de couloir 24 et la seconde porte de couloir 26.

Le module de rangement 10 permet de loger des chariots utilisés pour le service des repas et boissons aux passagers. Ces chariots sont plus connus sous le nom anglais « *trolley* », et ce terme sera utilisé par la suite pour les désigner. Le module de rangement 10 comporte ainsi un compartiment permettant de loger par exemple six trolleys.

La partie avant de fuselage décrite ici et représentée aux dessins comporte également un compartiment de repos pouvant accueillir, dans la forme de réalisation représentée, deux pilotes en position allongée.

L'accès au compartiment de repos se fait à partir du couloir 8. Cet accès se trouve face à la première porte d'accès 20 de la toilette 6. On accède au compartiment de repos à partir du couloir 8, en accédant tout d'abord à un palier 28 aménagé au-dessus du compartiment du module de rangement destiné à recevoir des trolleys.

Le palier 28 se trouve à une altitude plus élevée que le sol du couloir 8. Pour permettre alors un accès facile au palier 28, il est prévu d'aménager un escalier d'accès audit palier 28. Cet escalier 30 présente de préférence un encombrement très réduit et empiète le moins possible sur le couloir 8. Il est proposé ici d'avoir un escalier comportant plusieurs marches. Chaque marche se présente sous la forme d'une planche et est montée pivotante autour d'un axe horizontale, dans le cas présent également longitudinal. Chaque marche peut alors pivoter de 90°. Dans une première position, toutes les marches sont verticales. L'escalier 30 est alors hors service. Dans l'autre position pivotée, les marches sont à l'horizontale. On a alors une série de marches disposées les unes au-dessus des autres. L'escalier 30 est alors déployé et permet d'accéder au palier 28. Deux rampes sont de préférence prévues pour aider à gravir ou descendre l'escalier 30.

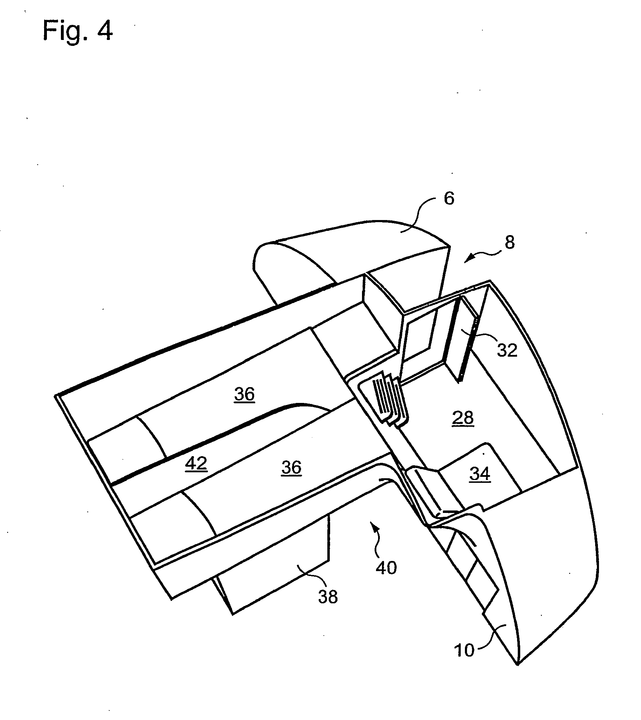

Au-dessus de l'escalier 30, une porte 32 est prévue pour isoler le couloir 8 du compartiment de repos, et plus précisément de la zone du compartiment de repos se trouvant au niveau du palier 28. Comme représenté sur la figure 4, cette porte 32 peut être réalisée en deux panneaux, ou volets, articulés l'un par rapport à l'autre le long d'un axe vertical.

Les rampes évoquées plus haut pour aider à gravir ou descendre l'escalier sont par exemple disposées de part et d'autre de la porte 32. Une forme de réalisation avantageuse prévoit que ces rampes peuvent s'escamoter à l'intérieur de la paroi sur laquelle elles se trouvent. Ainsi, lorsqu'elles sont escamotées, on évite des protubérances inutiles dans le couloir 8. De préférence le mouvement de ces rampes est coordonné avec celui de l'escalier 30. Ainsi, lorsque les marches de l'escalier 30 sont déployées, les rampes sortent de leur paroi et quand l'escalier passe en position escamotée, les rampes s'escamotent automatiquement dans la paroi correspondante.

Un siège 34 peut être disposé au niveau du palier 28. Ce siège est par exemple fixé sur une paroi verticale entourant le palier 28 de la même manière que le siège 18 est fixé à la paroi transversale 14. On peut prévoir ici un siège 34 de grand confort dont le dossier est éventuellement inclinable.

Le palier 28 permet d'accéder à deux couchettes 36. Ces deux couchettes s'étendent longitudinalement par rapport à l'aéronef. Elles sont disposées de part et d'autre de la ligne médiane longitudinale de cet aéronef. Ces couchettes 36 s'étendent depuis le module de rangement 10 vers l'arrière de l'aéronef. Ces couchettes 36 sont disposées à une altitude suffisante pour permettre de passer dessous. En effet, il convient de pouvoir d'une part accéder aux trolleys rangés dans le module de rangement 10, mais d'autre part, lors de l'embarquement et du débarquement des passagers, il est prévu de passer par devant le module de rangement 10 (et donc sous les couchettes 36).

On remarque sur les dessins un second module de rangement 38 disposé à l'arrière du premier module de rangement 10 et séparé de celui-ci par un couloir transversal 40.

Cette configuration avec deux modules de rangement disposés l'un derrière l'autre et séparés par un couloir transversal est tout à fait classique dans un aéronef, notamment un aéronef comportant une cabine passagers dans laquelle l'accès aux sièges se fait par deux couloirs longitudinaux. Le second module de rangement se trouve alors entre les deux couloirs longitudinaux qui débouchent dans le couloir transversal 40. Ce dernier est habituellement dans le prolongement de la porte d'embarquement 4, comme représenté dans la forme de réalisation des dessins.

Dans la forme de réalisation préférée représentée aux dessins, les deux couchettes 36 s'étendent au-dessus du couloir transversal 40 et au-dessus du second module de rangement 38. Ces couchettes 36 ne dépassent que très légèrement dans la cabine passagers, au-delà du second module de rangement 38. Cette position avantageuse des couchettes permet d'exploiter un volume jusqu'à présent inexploité sur les aéronefs de l'art antérieur. On remarque en outre que cette position prenant appui sur les structures de monuments, ici les modules de rangement 10 et 38, permet de s'adapter facilement aux structures connues des aéronefs de l'art antérieur.

On remarque en outre sur les figures que les deux couchettes 36 sont séparées l'une de l'autre par une cloison de séparation 42 qui permet à chacun des pilotes se trouvant sur une couchette 36 d'être isolé de l'autre pilote occupant la couchette 36 voisine.

On remarque aussi que l'accès au compartiment de repos depuis le cockpit 2 peut se faire à l'abri des regards des passagers se trouvant dans la cabine passagers. En effet, si la première porte de couloir 24 est fermée, un pilote peut passer par la seconde porte de couloir 26 et accéder, en franchissant la porte d'accès 32, au compartiment de repos.

Dans certaines conditions, le compartiment de repos peut inclure à la fois la toilette 6 et le couloir 8. En effet, lorsque les deux portes de couloir 24 et 26 sont fermées, de même que la seconde porte d'accès 22 à la toilette 6, l'espace formé par le couloir 8 et la toilette 6 peut être utilisé par un pilote pour se changer. Cet espace est un espace privatif qui peut être séparé du palier 28 lorsque la porte 32 est également fermée. Un pilote dispose alors d'un très grand volume par rapport à tout ce qui est proposé actuellement dans les compartiments de repos pour les pilotes d'aéronefs pour se changer, et ceci en toute intimité.

Pour augmenter ainsi l'espace disponible pour les pilotes, on utilise, grâce notamment à la présence des deux portes d'accès à la toilette 6, des zones d'accès communes qui peuvent être rendues privées à certains moments au gré des pilotes.

Pour assurer la sécurité de la zone occupée par les pilotes, il est préférable que les portes séparant cette zone de la cabine passagers soient blindées. On peut également prévoir que les parois de séparation soient des parois blindées. Ainsi, la première porte de couloir 24 et la seconde porte d'accès 22 à la toilette 6 sont de préférence des portes blindées. Les parois dans lesquelles ces portes sont montées sont elles aussi de préférence des parois blindées. On peut également prévoir un blindage sous les couchettes 36.

Etant donné que la toilette 6 est accessible à des passagers, il convient de prévoir également un blindage de la première porte d'accès 20 à la toilette 6 et de la paroi longitudinale 16 correspondante. On obtient de la sorte une bonne protection de la zone dans laquelle se trouvent les pilotes durant un vol. Dans le cas de l'aéronef décrit ici, la zone dans laquelle se trouvent les pilotes correspond au cockpit 2, à la toilette 6, au couloir 8, ainsi qu'au compartiment de repos décrit plus haut.

En ce qui concerne le blindage du cockpit et du compartiment de repos pour la sécurité des pilotes, il est également envisageable de blinder uniquement la première porte d'accès 20 à la toilette 6 et la première porte de couloir 24, ainsi qu'éventuellement les parois correspondantes.

Comme il ressort de ce qui précède, la toilette 6 est accessible, d'une part aux passagers et, d'autre part, aux pilotes. Il est possible de prévoir un système de réservation de la toilette 6 depuis le cockpit. Ainsi, un système de détection de présence peut indiquer si la toilette 6 est occupée ou non. Lorsqu'elle est inoccupée, un pilote peut alors, depuis le cockpit, verrouiller la seconde porte d'accès 22 qui sépare la toilette de la cabine passagers.

On peut prévoir également que lorsque cette seconde porte d'accès 22 de la toilette 6 est verrouillée à partir du cockpit 2, la première porte d'accès 20 à la toilette 6 est, quant à elle, déverrouillée de manière à permettre l'accès des pilotes à la toilette 6. Différents modes de gestion de l'occupation de la toilette 6 peuvent être envisagés.

La configuration de la partie avant du fuselage de l'aéronef décrite ci-dessus présente de nombreux avantages. Parmi les plus importants, on note que les pilotes bénéficient d'un compartiment de repos très spacieux en n'empiétant (quasiment) pas sur le volume de la cabine passagers. La toilette 6 servant aux passagers et aux pilotes que l'on trouve dans les aéronefs de l'art antérieur est maintenue, mais sa configuration avec les deux portes d'accès rend possible une exploitation tout à fait nouvelle et innovante permettant d'accroître très sensiblement le confort des pilotes au niveau du compartiment de repos sans pénaliser l'espace consacré aux passagers. La manière originale d'accéder au compartiment de repos permet de conserver, au niveau du premier module de rangement (et également du second module de rangement), un emplacement pour tous les trolleys que l'on trouve dans un aéronef de l'art antérieur. En outre, bien que disposées dans la partie supérieure de l'aéronef, les couchettes ne viennent pas empiéter sur le volume utilisé dans les aéronefs de l'art antérieur pour le rangement des bagages que les passagers ont l'habitude d'emporter avec eux durant un vol, c'est-à-dire que le nombre de coffres à bagages est identique pour deux avions similaires, l'un de l'art antérieur et l'autre selon la présente invention.

La forme de réalisation décrite ci-dessus, pour le compartiment de repos, répond à toutes les normes actuelles concernant le volume et l'isolation des compartiments de repos destinés aux pilotes. L'espace disponible, notamment dans l'aire permettant de changer de vêtements, est très sensiblement supérieur à toutes les exigences des normes et à toutes le configurations connues de l'art antérieur.

La présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

Ainsi, par exemple, la forme de réalisation proposée est particulièrement avantageuse car la disposition des couchettes permet de ne pas empiéter sur la cabine passagers. Toutefois, on ne sortirait pas du cadre de l'invention avec un compartiment de repos empiétant largement sur la zone passagers. Bien entendu, l'invention n'est pas limitée à une partie avant de fuselage d'aéronef comportant un compartiment de repos dans lequel se trouvent deux couchettes disposées longitudinalement. La position des couchettes peut être différente, de même que le nombre de couchettes.

## Revendications

1. Partie avant de fuselage d'aéronef comportant un cockpit (2), une toilette (6), un couloir (8) d'accès au cockpit longeant la toilette (6) et un compartiment de repos avec au moins une couchette (36) pour au moins un pilote, ledit couloir (8) longeant la toilette (6) comportant d'une part des moyens de séparation (26) du couloir (8) par rapport au cockpit (2) et d'autre part une porte (24) permettant de fermer l'accès vers une cabine passagers, et l'accès au compartiment de repos se faisant à partir du couloir (8) d'accès au cockpit (2), entre les moyens de séparation (26) entre le couloir (8) et le cockpit (2) et ladite porte du couloir (24), **caractérisée en ce que** la toilette (6) comporte deux portes d'accès, une première porte d'accès (20) permettant l'accès à la toilette (6) depuis le couloir (8) d'accès au cockpit (2) dans la zone comprise entre les moyens de séparation (26) entre le couloir (8) et le cockpit (2) et ladite porte du couloir (24) et une seconde porte d'accès (22) permettant d'accéder à la toilette (6) depuis la cabine passagers.

2. Partie avant de fuselage d'aéronef selon la revendication 1, **caractérisée en ce que** les moyens de séparation entre le couloir (8) d'accès au cockpit (2) et le cockpit (2) sont constitués d'une seconde porte (26) de couloir.

3. Partie avant de fuselage d'aéronef selon l'une des revendications 1 ou 2, **caractérisée en ce que** l'accès au compartiment de repos fait face à la première porte d'accès (20) de la toilette.

4. Partie avant de fuselage d'aéronef selon l'une des revendications 1 à 3, **caractérisée en ce que** le couloir (8) d'accès au cockpit (2) est disposé entre d'une part la toilette (6) et d'autre part un monument (10).

5. Partie avant de fuselage d'aéronef selon la revendication 4, **caractérisée en ce que** le monument (10) comprend un compartiment bas pour le rangement de chariots, et **en ce qu'**un palier (28) d'accès à la couchette (36) au nombre d'au moins une est réalisé dans le monument (10) au-dessus du compartiment de rangement de chariots, le palier d'accès (28) se trouvant à une altitude intermédiaire entre d'une part le sol du couloir (8) d'accès au cockpit (2) et d'autre part ladite couchette (36).

6. Partie avant de fuselage d'aéronef selon l'une des revendications 4 ou 5, **caractérisée en ce qu'**un second monument (38) est disposé face au premier monument (10), **en ce qu'**un couloir transversal (40) par rapport à l'aéronef sépare les deux monuments, et **en ce que** la couchette (36) au nombre d'au moins une s'étend au-dessus du couloir transversal (40) et au-dessus du second monument (38).

7. Partie avant de fuselage d'aéronef selon l'une des revendications 1 à 6, **caractérisée en ce que** le compartiment de repos comporte deux couchettes (36).

8. Partie avant de fuselage d'aéronef selon l'une des revendications 1 à 7, **caractérisée en ce que** les portes et parois séparant la toilette (6), le cockpit (2) et le compartiment de repos de la cabine passagers sont blindées.

9. Partie avant de fuselage d'aéronef selon la revendication 8, **caractérisée en ce que** la première porte d'accès (20) de la toilette (6) et la paroi (16) l'entourant est également blindée.

10. Aéronef, **caractérisé en ce qu'**il comporte une partie avant de fuselage selon l'une des revendications 1 à 9.

## Claims

1. Aircraft fuselage front portion comprising a cockpit (2), a toilet (6), a corridor (8) for access to the cockpit running alongside the toilet (6) and a rest compartment with at least one berth (36) for at least one pilot, the said corridor (8) running alongside the toilet (6) comprising means for separation (26) of the corridor (8) from the cockpit (2) and further comprising a door (24) enabling the access to a passenger cabin to be closed, and the access to the rest compartment being gained from the corridor (8) for access to the cockpit (2), between the means for separation (26) between the corridor (8) and the cockpit (2) and the said corridor door (24), **characterized in that** the toilet (6) comprises two access doors, a first access door (20) enabling the access to the toilet (6) from the corridor (8) for access to the cockpit (2) in the zone that is situated between the means for separation (26) between the corridor (8) and the cockpit (2) and the said corridor door (24) and a second access door (22) enabling access to the tollet (6) from the passenger cabin.

2. Aircraft fuselage front portion according to claim 1, **characterized in that** the means for separation between the corridor (8) for access to cockpit (2) and the cockpit (2) are constituted by a second corridor door (26),

3. Aircraft fuselage front portion according to one of claims 1 or 2, **characterized in that** the access to the rest compartment faces the first access door (20) for the toilet.

4. Aircraft fuselage front portion according to one of claims 1 to 3, **characterized in that** the corridor (8) for access to the cockpit (2) is disposed between the toilet (6) and a monument (10).

5. Aircraft fuselage front portion according to claim 4, **characterized in that** the monument (10) comprises a low compartment for the storage of trolleys, and **In that** a landing (28) for access to the at least one berth (36) is formed in the monument (10) above the storage compartment for trolleys, the access landing (28) being at a height intermediate between the floor of corridor (8) for access to the cockpit (2) and the said berth (36).

6. Aircraft fuselage front portion according to one of claims 4 or 5, **characterized in that** a second monument (38) is disposed opposite the first monument (10), **in that** a corridor (40) crosswise in relation to the aircraft separates the two monuments, and **In that** the at least one berth (36) extends above the crosswise corridor (40) and above the second monument (38).

7. Aircraft fuselage front portion according to one of claims 1 to 6, **characterized in that** the rest compartment comprises two berths (36).

8. Aircraft fuselage front portion according to one of claims 1 to 7, **characterized in that** the doors and walls separating the toilet (6), the cockpit (2) and the rest compartment from the passenger cabin are reinforced.

9. Aircraft fuselage front portion according to claim 8, **characterized in that** the first access door (20) for the toilet (6) and the wall (16) surrounding it also is reinforced.

10. Aircraft, **characterized in that** It comprises a fuselage front portion according to one of claims 1 to 9,

## Patentansprüche

1. Flugzeugrumpf-Vorderteil, umfassend ein Cockpit (2), eine Toilette (6), einen an der Toilette (6) entlanggehenden Gang (8) für den Zugang zum Cockpit und ein Ruheabteil mit mindestens einer Liege (36) für mindestens einen Piloten, wobei der an der Toilette (6) entlanggehende Gang (8) einerseits Mittel (26) zum Abtrennen des Gangs (8) vom Cockpit (2) und andererseits eine Tür (24) umfasst, die die Schließung des Zugangs zu einem Fluggastraum gestattet, und der Zugang zum Ruheabteil von dem Gang (8) für den Zugang zum Cockpit (2) aus zwischen den den Gang (8) vom Cockpit (2) trennenden Mitteln (26) und der Gangtür (24) stattfindet, **dadurch gekennzeichnet, dass** die Toilette (6) zwei Zugangstüren umfasst, wobei eine erste Zugangstür (20) den Zugang zur Toilette (6) vom Gang (8) für den Zugang zum Cockpit (2) aus in der Zone zwischen den den Gang (8) vom Cockpit (2) trennenden Mitteln (26) und der Gangtür (24) gestattet und eine zweite Zugangstür (22) den Zugang zur Toilette (6) vom Fluggastraum aus gestattet.

2. Flugzeugrumpf-Vorderteil nach Anspruch 1, **dadurch gekennzeichnet, dass** die Trennmittel zwischen dem Gang (8) für den Zugang zum Cockpit (2) und dem Cockpit (2) aus einer zweiten Gangtür (26) bestehen.

3. Flugzeugrumpf-Vorderteil nach einem der Ansprüche 1 oder 2, **dadurch gekennzeichnet, dass** der Zugang zu dem Ruheabteil gegenüber der ersten Tür (20) für den Zugang zur Toilette stattfindet.

4. Flugzeugrumpf-Vorderteil nach einem der Ansprüche 1 bis 3, **dadurch gekennzeichnet, dass** der Gang (8) für den Zugang zum Cockpit (2) zwischen einerseits der Toilette (6) und andererseits einem Monument (10) angeordnet ist.

5. Flugzeugrumpf-Vorderteil nach Anspruch 4, **dadurch gekennzeichnet, dass** das Monument (10) ein unteres Abteil für das Verstauen von Wagen umfasst und dass ein Podest (28) für den Zugang zu der Liege (36) in der Anzahl von mindestens einer in dem Monument (10) über dem Abteil zum Verstauen von Wagen ausgeführt ist, wobei das Zugangspodest (28) sich in einer Zwischenhöhe zwischen einerseits dem Boden des Gangs (8) für den Zugang zum Cockpit (2) und andererseits der Liege (36) befindet.

6. Flugzeugrumpf-Vorderteil nach einem der Ansprüche 4 oder 5, **dadurch gekennzeichnet, dass** ein zweites Monument (38) gegenüber dem ersten Monument (10) angeordnet ist, dass ein Gang (40) quer zum Flugzeug die beiden Monumente trennt und dass die Liege (36) in der Anzahl von mindestens einer sich über dem Quergang (40) und über dem zweiten Monument (38) erstreckt.

7. Flugzeugrumpf-Vorderteil nach einem der Ansprüche 1 bis 6, **dadurch gekennzeichnet, dass** das Ruheabteil zwei Liegen (36) umfasst.

8. Flugzeugrumpf-Vorderteil nach einem der Ansprüche 1 bis 7, **dadurch gekennzeichnet, dass** die die Toilette (6), das Cockpit (2) und das Ruheabteil von dem Fluggastraum trennenden Türen und Wände gepanzert sind.

9. Flugzeugrumpf-Vorderteil nach Anspruch 8, **dadurch gekennzeichnet, dass** die erste Tür (20) für den Zugang zur Toilette (6) und die sie umgebende Wand (16) ebenfalls gepanzert ist.

10. Flugzeug, **dadurch gekennzeichnet, dass** es einen Rumpfvorderteil nach einem der Ansprüche 1 bis 9 umfasst.
